# FASCICULE DE BREVET EUROPEEN

(11) **EP 2 011 692 B1**
(45) Date de publication et mention de la délivrance du brevet: **13.01.2010**
(21) Numéro de dépôt: 08305347.0
(22) Date de dépôt: 27.06.2008
(51) Int. Cl.: B60R 7/04, B60R 7/06, B60R 13/08

(54) **Boîtier de rangement pour véhicule automobile**
Aufbewahrungsbehälter für ein Kraftfahrzeug
Storage box for a motor vehicle

(30) Priorité: 29.06.2007 FR 0756177
(43) Date de publication de la demande: 07.01.2009
(73) Titulaire: PEUGEOT CITROËN AUTOMOBILES S.A., 78140 Velizy Villacoublay (FR)
(72) Inventeur: Hespel, Denis, 91250, TIGERY (FR); Auffray, Bertrand, 78330, FONTENAY LE FLEURY (FR)

(56) Documents cités:
- EP-A- 1 782 998
- DE-A1- 10 014 728
- DE-A1- 19 540 399
- FR-A- 2 796 889
- US-B1- 6 231 098

## Description

L'invention concerne les boîtiers de rangement implantés dans les véhicules automobiles, et en particulier les boîtiers de rangement connectés à un circuit de ventilation.

De nombreux boîtiers de rangement sont implantés dans la plupart des véhicules automobiles. De tels boîtiers de rangement sont accessibles sur ou sous la planche de bord ou au niveau de la console centrale. Les boîtiers de rangement forment une enceinte fermée délimitée par des parois fixes et par un ouvrant permettant d'accéder à l'enceinte.

Sur certains véhicules haut de gamme, ces boîtiers de rangement sont refroidis. Pour un boîtier de rangement de planche de bord, une technique connue consiste à connecter un conduit en dérivation sur le circuit de ventilation principal du véhicule. Une extrémité du conduit en dérivation est raccordée à une ouverture réalisée dans la paroi du boîtier. L'autre extrémité du conduit en dérivation est raccordée à une ouverture réalisée dans une paroi d'un conduit principal de ventilation.

Cette solution présente des inconvénients. Ainsi, le conduit en dérivation génère d'importantes pertes de charge pour l'écoulement dans le conduit principal. Pour conserver une ventilation efficace, la puissance du ventilateur alimentant le conduit principal doit ainsi être accrue. En outre, le raccordement avec le conduit en dérivation génère des turbulences dans le conduit principal. Ces turbulences génèrent des bruits dans l'habitacle, d'autant plus décelables par l'utilisateur que le véhicule est bien insonorisé par rapport à l'extérieur.

Pour un boîtier de console centrale et afin de réduire l'encombrement, une technique connue consiste à accoler une paroi du boîtier au conduit principal du circuit de ventilation, en aval d'un ventilateur principal. Une ouverture ménagée dans la paroi du boîtier communique avec une ouverture ménagée dans la paroi du conduit principal. Afin de dévier un flux d'air à l'intérieur du boîtier, un obstacle est disposé dans le conduit principal au niveau des ouvertures. Pour accroître le flux d'air à l'intérieur du boîtier, un ventilateur relais est disposé au niveau des ouvertures du boîtier et du conduit principal.

Cette solution présente également des inconvénients. La présence d'une ouverture et d'un obstacle dans le conduit génère une très forte perte de charge ainsi que d'importantes turbulences à l'origine de bruits dans l'habitacle. De plus, le débit d'air à l'intérieur du conduit principal étant important, le niveau sonore des bruits générés est assez important. Le ventilateur relais accroît également le bruit généré.

Des boîtiers de rangement selon le préambule de la revendication 1 sont connus des documents FR-A-2 796 889, DE 195 40 399 A1, US 6 231 098 B1, DE 100 14 728 A1 et EP 1 782 998 A2.

L'invention vise à résoudre un ou plusieurs de ces inconvénients. L'invention porte ainsi sur un boîtier de rangement pour véhicule automobile, comprenant une paroi délimitant une enceinte de rangement, une ouverture d'aération étant ménagée dans la paroi, caractérisé en ce que le boîtier comprend en outre un élément d'aération en matériau perméable à l'air obturant l'ouverture d'aération.

Conformément à d'autres caractéristiques avantageuses de l'invention :
- l'élément d'aération est réalisé en matériau microperforé, en matériau fibreux, en matériau fibreux compressé ou en mousse synthétique ;
- le rapport entre la section des microperforations et la surface de l'élément d'aération est inférieur à 10 %, et de préférence compris entre 2 et 5% ;
- l'élément d'aération forme une paroi continue ;
- l'ouverture d'aération présente une section supérieure à 50 cm², de préférence supérieure à 100 cm² ;
- l'élément d'aération, un autre élément d'aération en matériau perméable à l'air obturant l'ouverture et un obturateur interposé entre les éléments d'aération et mobile entre des positions de mise en communication et d'isolation des éléments d'aération une commande d'actionnement de l'obturateur entre lesdites positions ;
- lequel l'autre élément d'aération est formé par un habillage perméable à l'air et recouvrant la paroi à l'intérieur de l'enceinte ;
- lequel un orifice d'accès à l'enceinte est ménagé dans la paroi, le boîtier comprenant en outre un couvercle mobile entre des positions d'obturation et d'ouverture de l'orifice d'accès.

L'invention se rapporte également à un composant de véhicule automobile, comprenant un boîtier de rangement selon l'une quelconque des variantes précédentes, un conduit de ventilation comprenant une paroi délimitant un volume de passage d'air et dans laquelle une ouverture est ménagée en vis-à-vis de l'ouverture de la paroi du boîtier, l'élément d'aération en matériau perméable à l'air du boîtier de rangement obturant cette ouverture.

Conformément à d'autres caractéristiques avantageuses de l'invention :
- la paroi du conduit délimite la section de passage d'air entre deux ouvertures distales, et dans lequel l'ouverture de la paroi du conduit est ménagée dans une partie intermédiaire de la paroi parallèle à la direction de l'écoulement à l'intérieur du conduit ;
- les périphéries des ouvertures en vis-à-vis du boîtier et du conduit sont jointes de manière imperméable à l'air ;
- la section de passage d'air au niveau de ladite ouverture est supérieure à la section de passage d'air moyenne du conduit ;
- la paroi du boîtier et la paroi du conduit sont accolées.

L'invention se rapporte également à un véhicule automobile comprenant un composant selon l'une quelconque des variantes précédentes et une planche de bord dans laquelle le boîtier de rangement est disposé.

L'invention se rapporte également à un véhicule automobile comprenant un composant selon l'une quelconque des variantes précédentes et comprenant deux sièges avant entre lesquels le boîtier de rangement est disposé.

L'invention se rapporte également à un véhicule automobile comprenant un composant selon l'une des variantes précédentes, une alimentation en air et un aérateur, dans lequel les ouvertures distales du conduit sont connectées respectivement à l'alimentation en air et à l'aérateur.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en coupe schématique d'un boîtier de rangement associé à un conduit de ventilation selon un premier mode de réalisation de l'invention ;
- la figure 2 est une vue en coupe schématique d'un boîtier de rangement associé à un conduit de ventilation selon un second mode de réalisation de l'invention ;
- la figure 3 est une vue de dessus d'un exemple d'élément d'aération du boîtier de rangement ;
- la figure 4 est une vue en perspective d'éléments d'aération microperforés entre lesquels est placé un obturateur mobile ;
- les figures 5 et 6 sont des vues schématiques respectivement de dessus et de dessous d'un boîtier de rangement implanté dans une console centrale associé à un conduit de ventilation des passagers arrière.

L'invention propose de réaliser l'aération d'un boîtier de rangement de véhicule automobile par l'intermédiaire d'un élément de paroi perméable à l'air destiné à former un élément de paroi d'un conduit de ventilation du véhicule.

Ainsi, une alimentation en air du boîtier de rangement est obtenue sans générer de turbulences dans le conduit de ventilation du véhicule. De plus, la paroi perméable à l'air absorbe une partie des bruits se propageant dans le conduit. Ainsi, l'alimentation en air du conduit permet non seulement de ne pas générer de bruits supplémentaires mais aussi de réduire les bruits provenant d'autres sources et se propageant dans le conduit. Une telle alimentation en air permet également d'induire des pertes de charge extrêmement limitées dans le conduit.

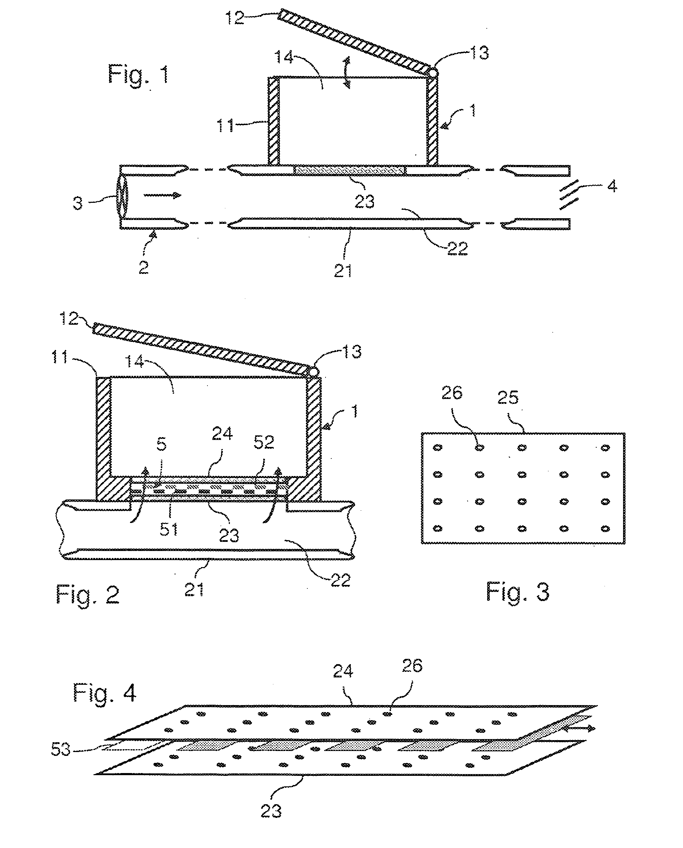

La figure 1 représente schématiquement un boîtier de rangement 1 implanté dans une console centrale entre les sièges avant d'un véhicule, ainsi qu'un conduit d'aération 2 associé. Le boîtier de rangement 1 présente une paroi 11 délimitant une enceinte 14. Un orifice d'accès à l'enceinte 14 peut être fermé par l'intermédiaire d'un couvercle 12 afin d'isoler thermiquement l'enceinte 14 de l'habitacle. A cet effet, le couvercle 12 est monté pivotant au sommet de la paroi 11 par l'intermédiaire d'une charnière 13. L'ouverture du couvercle 12 libère l'orifice d'accès et permet à un utilisateur d'accéder au contenu de l'enceinte 14.

Un conduit 2 est disposé sous le boîtier 1 et lui est accolé. Le boîtier 1 est avantageusement fixé au conduit 2 par tout moyen adéquat : collage, vissage, pliage, boutrollage ou soudure plastique. Le conduit 2 comprend une paroi 21 délimitant un volume 22 de passage d'air. Le conduit 2 présente deux ouvertures distales connectées respectivement à un ventilateur 3 et à un aérateur 4. Le ventilateur 3 permet de générer un flux d'air dans le volume 22 en direction de l'aérateur 4. Le ventilateur 3 est avantageusement connecté à la sortie d'un dispositif de climatisation non illustré, afin d'alimenter l'aérateur 4 en air climatisé.

La paroi 11 et la paroi 21 présentent des ouvertures respectives placées en vis-à-vis et obturées par un même élément d'aération 23 perméable à l'air. La perméabilité à l'air de l'élément 23 lui permet de laisser passer de l'air vers l'enceinte 14. La perméabilité à l'air de l'élément 23 permet de limiter le débit surfacique en direction de l'enceinte, et ainsi de ne pas générer de turbulences dans l'écoulement à l'intérieur du conduit 2. Comme l'élément d'aération 23 obture l'ouverture communiquant avec l'enceinte 14, il guide l'écoulement d'air selon la longueur du conduit 2. Pour éviter des fuites dans le circuit d'air, les périphéries des ouvertures de la paroi 11 et du conduit 2 sont jointes de manière imperméable à l'air.

Le débit surfacique à travers l'élément 23 étant réduit, l'élément 23 présente avantageusement une surface supérieure à 50cm², voire supérieure à 100 cm².

L'élément 23 peut être réalisé sous forme d'une paroi continue et poreuse, exempte de perforations visibles. Cette paroi peut être réalisé en matériau fibreux, en matériau fibreux compressé tel que le produit commercialisé sous la référence SOMMOLD par la société Faurecia, ou en mousse synthétique telle qu'une mousse polyuréthane.

L'élément 23 peut également être réalisé à partir d'une paroi 25 en matériau microperforé, illustrée à la figure 3. La paroi 25 présente une pluralité de microperforations 26 réparties sur sa surface. Les microperforations 26 peuvent être de forme circulaire, ovale ou réalisées sous forme de rainures. Des microperforations circulaires présentent avantageusement un diamètre inférieur à 3 millimètres, et de préférence un diamètre inférieur ou égal à 1 millimètre.

Le rapport entre la section des microperforations 26 et la surface de l'élément 23 est de préférence inférieur à 15% et avantageusement inférieur à 10%. De façon optimale, ce rapport est compris entre 2 et 5%.

L'espacement entre les rangées de microperforations illustrées à la figure 3 est avantageusement compris entre 5 et 20 millimètres.

L'élément 23 est de préférence rigide afin de participer à la résistance mécanique du conduit 2 ou afin de résister aux efforts exercés par des objets placés dans l'enceinte 14. Le conduit 2 présente avantageusement une section de passage d'air supérieure au niveau de sa jonction avec le boîtier 1.

La figure 2 illustre un autre mode de réalisation de l'invention permettant d'absorber encore mieux les bruits générés dans le conduit 2 en amont du boîtier de rangement. Le boîtier de rangement 1 et le conduit 2 sont sensiblement identiques au mode de réalisation de la figure 1. L'élément perméable 23 obture les ouvertures en vis-à-vis de boîtier 1 et du conduit 2 et est en contact avec l'écoulement à l'intérieur du conduit 2. Un autre élément perméable à l'air 24 est disposé en vis-à-vis de l'élément 23 et obture également les ouvertures respectives du boîtier 1 et du conduit 2. En l'occurrence, l'élément 24 est formé par un habillage recouvrant la paroi 11 à l'intérieur de l'enceinte 14.

Un obturateur 5 est interposé entre les éléments 23 et 24. L'obturateur 5 est sélectivement placé dans des positions où il met en communication ou isole les éléments 23 et 24. Une commande d'actionnement non illustrée permet à un utilisateur de changer la position de l'obturateur 5. Dans l'exemple illustré, l'obturateur 5 comprend une rangée de lamelles fixes 52 et une rangée de lamelles mobiles 51. Les lamelles mobiles 51 sont montées coulissantes selon une direction perpendiculaire à leur longueur. Dans la position de fermeture de l'obturateur 5, les lamelles 51 sont décalées par rapport aux lamelles fixes 52, de façon à recouvrir les interstices ménagés entre ces lamelles 52. Dans la position d'ouverture de l'obturateur 5, les lamelles 51 et les lamelles 52 sont superposées, de façon à découvrir les interstices entre les lamelles 52, et ainsi mettre les éléments 23 et 24 en communication. L'alimentation en air de l'enceinte 14 peut ainsi être sélectivement fermée ou ouverte.

Un autre avantage de ce mode de réalisation est d'améliorer l'absorption des bruits dans le conduit 2 générés en amont de l'élément 23. En effet, lorsque l'obturateur 5 est fermé, une cavité est ménagée entre l'élément perméable 23 et l'obturateur 5.

La figure 4 illustre un exemple d'obturateur formé de lamelles 53 interposées entre des éléments 23 et 24. Des microperforations 26 sont ménagées dans les éléments 23 et 24, et sont alignées selon la longueur des lamelles 53. Les lamelles 53 sont mobiles en translation perpendiculairement à cette direction d'alignement, entre une position où elles recouvrent et une position où elles découvrent les microperforations 26.

L'obturateur 5 pourra être réalisé par tout autre moyen adéquat. On pourrait notamment réaliser un obturateur 5 sous forme de volet coulissant pour obturer les ouvertures du conduit 2 et du boîtier 1.

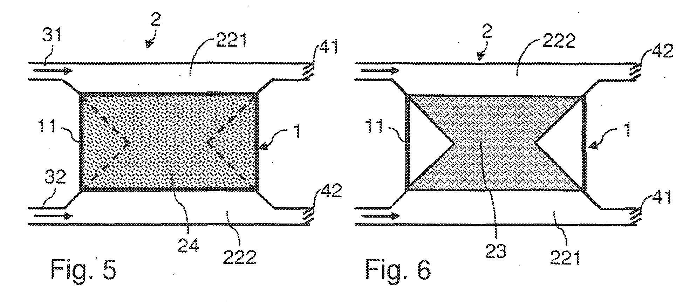

Les figures 5 et 6 illustrent une variante dans laquelle le conduit 2 présente deux entrées d'alimentation 31 et 32 et deux sorties connectées à des aérateurs 41 et 42. Cette configuration peut correspondre à une implantation du boîtier 1 entre deux sièges avant d'un véhicule. Les entrées 31 et 32 sont mises en communication avec les passages d'air 41 et 42 par l'intermédiaire respectivement des passages 221 et 222. Au niveau du boîtier 1, les passages 221 et 222 présentent une jonction disposée sous le boîtier 1. L'élément 23 délimite une partie de la jonction, permettant à de l'air présent dans la jonction d'atteindre l'enceinte du boîtier 1.

Bien que la description ait essentiellement détaillé un boîtier destiné à être implanté entre les sièges avant d'un véhicule, l'invention s'applique à tout boîtier de rangement implanté dans le véhicule, notamment un boîtier de rangement implanté dans la planche de bord du véhicule.

## Revendications

1. Boîtier de rangement (1) pour véhicule automobile, comprenant une paroi (11) délimitant une enceinte de rangement (14), une ouverture d'aération étant ménagée dans la paroi, **caractérisé en ce que** le boîtier (1) comprend en outre un élément d'aération (23) en matériau perméable à l'air obturant l'ouverture d'aération.

2. Boîtier de rangement selon la revendication 1, dans lequel l'élément d'aération (23) est réalisé en matériau fibreux, en matériau fibreux compressé ou en mousse synthétique.

3. Boîtier de rangement selon la revendication 1 ou 2, dans lequel l'élément d'aération (23) forme une paroi continue.

4. Boîtier de rangement selon la revendication 1, dans lequel l'élément d'aération est réalisé en matériau microperforé.

5. Boîtier de rangement selon la revendication 4, dans lequel le rapport entre la section des microperforations (26) et la surface de l'élément d'aération est inférieur à 10 %, et de préférence compris entre 2 et 5%.

6. Boîtier de rangement selon l'une quelconque des revendications précédentes, dans lequel l'ouverture d'aération présente une section supérieure à 50 cm², de préférence supérieure à 100 cm².

7. Boîtier de rangement selon l'une quelconque des revendications précédentes, comprenant en outre :
- en vis-à-vis dudit élément d'aération, un autre élément d'aération (24) en matériau perméable à l'air obturant l'ouverture; et
- un obturateur (5) interposé entre les éléments d'aération (23, 24) et mobile entre des positions de mise en communication et d'isolation des éléments d'aération ;
- une commande d'actionnement de l'obturateur entre lesdites positions.

8. Boîtier de rangement selon la revendication 7, dans lequel l'autre élément d'aération est formé par un habillage (24) perméable à l'air et recouvrant la paroi (11) à l'intérieur de l'enceinte (14).

9. Boîtier de rangement selon l'une quelconque des revendications précédentes, dans lequel un orifice d'accès à l'enceinte (14) est ménagé dans la paroi (11), le boîtier (1) comprenant en outre un couvercle (12) mobile entre des positions d'obturation et d'ouverture de l'orifice d'accès.

10. Composant de véhicule automobile, comprenant :
- un boîtier de rangement selon l'une quelconque des revendications Précédentes ;
- un conduit de ventilation (2) comprenant une paroi (21) délimitant un volume de passage d'air (22) et dans laquelle une ouverture est ménagée en vis-à-vis de l'ouverture de la paroi du boîtier, l'élément d'aération (23) en matériau perméable à l'air du boîtier de rangement obturant cette ouverture.

11. Composant de véhicule automobile selon la revendication 10, dans lequel la paroi (21) du conduit délimite la section de passage d'air entre deux ouvertures distales, et dans lequel l'ouverture de la paroi du conduit est ménagée dans une partie intermédiaire de la paroi parallèle à la direction de l'écoulement à l'intérieur du conduit

12. Composant de véhicule selon la revendication 10 ou 11, dans lequel les périphéries des ouvertures en vis-à-vis du boîtier et du conduit sont jointes de manière imperméable à l'air.

13. Composant de véhicule selon l'une quelconque des revendications 10 à 12 dans lequel la section de passage d'air au niveau de ladite ouverture est supérieure à la section de passage d'air moyenne du conduit

14. Composant de véhicule selon l'une quelconque des revendications 10 à 13, dans lequel la paroi du boîtier et la paroi du conduit sont accolées.

15. Véhicule automobile comprenant un composant selon l'une quelconque des revendications 10 à 14 et comprenant une planche de bord dans laquelle le boîtier de rangement (1) est disposé.

16. Véhicule automobile comprenant un composant selon l'une quelconque des revendications 10 à 14 et comprenant deux sièges avant entre lesquels le boîtier de rangement (1) est disposé.

17. Véhicule automobile selon la revendication 15 ou 16 comprenant un composant selon la revendication 11, une alimentation en air (3) et un aérateur (4), dans lequel les ouvertures distales du conduit sont connectées respectivement à l'alimentation en air et à l'aérateur.

## Claims

1. Storage box (1) for a motor vehicle, including a wall (11) defining a storage space (14), the wall being furnished with an aperture for ventilation, **characterized in that** the box (1) further includes a ventilation element (23) made from an air-permeable material blocking the ventilation aperture.

2. Storage box as recited in claim 1, in which the ventilation element (23) is produced from a fibrous material, or a compressed fibrous material, or synthetic foam.

3. Storage box as recited in claim 1 or 2, in which the ventilation element (23) forms a continuous wall.

4. Storage box as recited in claim 1, in which the ventilation element is produced from a microperforated material.

5. Storage box as recited in claim 4, in which the ratio between the section of microperforations (26) and the surface of the ventilation element is less than 10%, and preferably between 2 and 5%.

6. Storage box as recited in any of the preceding claims, in which the area of the ventilation element is greater than 50 cm³, preferably greater than 100 cm³.

7. Storage box as recited in any of the preceding claims, further including:
- another ventilation element (24) facing the first ventilation element and made from air-permeable material, blocking the aperture; and
- a closing element (5) arranged between the ventilation elements (23, 24) and movable between positions that separate the ventilation elements and allow them to communicate;
- a actuator control for shifting the covering element between the positions.

8. Storage box as recited in claim 7, in which the second ventilation element is formed by an air-permeable cover (24) that covers the wall (11) inside the space (14).

9. Storage box as recited in any of the preceding claims, in which an opening for access to the space (14) is arranged in the wall (11), and the box (1) further includes a lid (12) that is movable between the positions for blocking and opening the access opening.

10. Component for a motor vehicle, including:
- a storage box as recited in any of the preceding claims;
- a ventilation duct (2) including a wall (21) defining an air flow volume (22) and in which an aperture is arranged facing the wall of the box, and the ventilation element (23) made from air-permeable material of the storage box blocks this aperture.

11. Component for a motor vehicle as recited in claim 10, in which the wall (21) of the duct defines the cross section of the air passage between two distal apertures, and in which the aperture in the duct wall is located in an intermediate section of the wall parallel to the direction of flow inside the duct.

12. Component for a motor vehicle as recited in claims 10 or 11, in which the peripheries of the apertures facing the box and the duct are sealed so as to be impermeable to air.

13. Component for a motor vehicle as recited in any of claims 10 to 12, in which the cross section of the air passage at said aperture is larger than the average cross section of the air passage of the duct.

14. Component for a motor vehicle as recited in any of claims 10 to 13, in which the wall of the box and the wall of the duct are adjacent to one another.

15. Motor vehicle as recited in any of claims 10 to 14, and including a console in which the storage box (1) is situated.

16. Motor vehicle including a component as recited in any of claims 10 to 14, and including two front seats, between which the storage box (1) is situated.

17. Motor vehicle as recited in claims 15 or 16, including a component as recited in claim 11, an air supply (3) and a vent (4), in which the distal apertures of the duct are connected to the air supply and the vent respectively.

## Patentansprüche

1. Ablagegehäuse (1) für Kraftfahrzeug, das eine Wand (11) aufweist, die einen Ablageeinschluss (14) abgrenzt, wobei eine Belüftungsöffnung in der Wand eingerichtet ist, **dadurch gekennzeichnet, dass** das Gehäuse (1) ferner ein Belüftungselement (23) aus Luft durchlässigem Werkstoff, das die Belüftungsöffnung verschließt, aufweist.

2. Ablagegehäuse nach Anspruch 1, bei dem das Belüftungselement (23) aus faserigem Werkstoff, aus faserigem, komprimiertem Werkstoff oder aus Synthetikschaumstoff hergestellt ist.

3. Ablagegehäuse nach Anspruch 1 oder 2, bei dem das Belüftungselement (23) eine ununterbrochene Wand bildet.

4. Ablagegehäuse nach Anspruch 1, bei dem das Belüftungselement aus mikroperforiertem Werkstoff hergestellt ist.

5. Ablagegehäuse nach Anspruch 4, bei dem das Verhältnis zwischen dem Querschnitt der Mikroperforierungen (26) und der Fläche des Belüftungselements kleiner ist als 10 % und vorzugsweise zwischen 2 und 5 %.

6. Ablagegehäuse nach einem der vorhergehenden Ansprüche, bei dem die Belüftungsöffnung einen Querschnitt größer als 50 cm² aufweist, vorzugsweise größer als 100 cm².

7. Ablagegehäuse nach einem der vorhergehenden Ansprüche, das ferner Folgendes aufweist:
- gegenüber dem Belüftungselement ein weiteres Belüftungselement (24) aus Luft durchlässigem Werkstoff, das die Öffnung verschließt, und
- einen Verschluss (5), der zwischen die Belüftungselemente (23, 24) eingefügt und zwischen einer Positionen zum Herstellen der Kommunikation und einer Position zum Absperren der Belüftungselemente beweglich ist.
- eine Steuerung zum Betätigen des Verschlusses zwischen den Positionen.

8. Ablagegehäuse nach Anspruch 7, bei dem das andere Belüftungselement aus einer Luft durchlässigen Verkleidung (24) gebildet ist und die Wand (11) im Inneren des Einschlusses (14) abdeckt.

9. Ablagegehäuse nach einem der vorhergehenden Ansprüche, bei dem eine Zugangsöffnung zu dem Einschluss (14) in der Wand (11) eingerichtet ist, wobei das Gehäuse (1) ferner einen Deckel (12) aufweist, der zwischen einer Verschluss- und einer Öffnungsposition der Zugangsöffnung beweglich ist.

10. Bauteil für Kraftfahrzeug, Folgendes aufweisend:
- ein Ablagegehäuse nach einem der vorhergehenden Ansprüche;
- eine Belüftungsleitung (2), die eine Wand (21) aufweist, die ein Luftdurchgangsvolumen (22) abgrenzt und in der eine Öffnung gegenüber der Öffnung der Wand des Gehäuses eingerichtet ist, wobei das Belüftungselement (23) aus Luft durchlässigem Werkstoff des Ablagegehäuses diese Öffnung verschließt.

11. Bauteil für Kraftfahrzeug nach Anspruch 10, bei dem die Wand (21) der Leitung den Luftdurchgangsquerschnitt zwischen zwei distalen Öffnungen abgrenzt und bei dem die Öffnung der Wand der Leitung in einem Zwischenteil der Wand, der zu der Fließrichtung im Inneren der Leitung parallel ist, eingerichtet ist.

12. Bauteil für Kraftfahrzeug nach Anspruch 10 oder 11, bei dem die Umfänge der Öffnungen gegenüber dem Gehäuse und der Leitung luftundurchlässig verbunden sind.

13. Bauteil für Kraftfahrzeug nach einem der Ansprüche 10 bis 12, bei dem der Luftdurchgangsquerschnitt auf dem Niveau der Öffnung größer ist als der mittlere Luftdurchgangsquerschnitt der Leitung.

14. Bauteil für Kraftfahrzeug nach einem der Ansprüche 10 bis 13, bei dem die Wand des Gehäuses und die Wand der Leitung aneinander gefügt sind.

15. Kraftfahrzeug, das einen Bauteil nach einem der Ansprüche 10 bis 14 aufweist und ein Armaturenbrett aufweist, in dem das Ablagegehäuse (1) angeordnet ist.

16. Kraftfahrzeug, das einen Bauteil nach einem der Ansprüche 10 bis 14 aufweist und zwei Vordersitze aufweist, zwischen welchen das Ablagegehäuse (1) angeordnet ist.

17. Kraftfahrzeug nach Anspruch 15 oder 16, das einen Bauteil nach Anspruch 11, eine Luftversorgung (3) und einen Belüfter (4) aufweist, bei dem die distalen Öffnungen der Leitung jeweils an die Luftversorgung und den Belüfter angeschlossen sind.
